# EUROPEAN PATENT APPLICATION

(11) **EP 4 611 161 A1**
(43) Date of publication of application: **03.09.2025**
(21) Application number: 23915252.3
(22) Date of filing: 09.01.2023
(51) Int. Cl.: H01M 50/531, H01M 50/533, H01M 50/536

(54) **BATTERY CELL, BATTERY MODULE AND ELECTRICAL APPARATUS**

(71) Applicant: Contemporary Amperex Technology (Hong Kong) Limited, Central (HK)
(72) Inventor: LIN, Denghua, Ningde, Fujian 352100 (CN); CHEN, Long, Ningde, Fujian 352100 (CN); ZHOU, Wenlin, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2023/071398
(87) International publication number: WO 2024/148471

(57) **Abstract**

A battery unit (1), a battery module, and an electrical device are disclosed. The battery unit (1) includes: a housing (200), where the housing (200) is provided with a first electrode terminal (31) and a second electrode terminal (32); at least one battery cell (40), where the battery cell (40) includes a first electrode plate and a second electrode plate, and the second electrode terminal (32) is connected to the second electrode plate; and an adapter strip assembly (100), where the adapter strip assembly (100) is sandwiched between the housing (200) and the battery cell (1) and includes a first adapter strip (12) and a first bracket (1103), and the first adapter strip (12) is supported on the first bracket (1103) and connected to the first electrode terminal (31) and the first electrode plate.

## Description

### TECHNICAL FIELD

This application relates to the field of battery technology, and in particular, to a battery unit, a battery module, and an electrical device.

### BACKGROUND

The secondary battery disclosed in literature CN109713353B includes a housing, an electrode assembly, a top cover assembly, and an adapter strip. The top cover assembly includes a top cover sheet and an electrode terminal fixed onto the top cover sheet. The adapter strip includes a main portion and a protruding portion. The main portion is connected to a tab of the electrode assembly. The protruding portion extends from an adapter strip lead-out hole on the top cover sheet to a position beyond an electrode terminal surface, so as to be welded to the electrode terminal.

However, the main portion of the adapter strip is connected to a lower part of the tab, thereby producing an effect that the adapter strip is suspended. In welding the electrode terminal and the protruding portion, the adapter strip is prone to deform downward under the action of the gravity of the adapter strip and a downward thrust force, thereby resulting in welding deficiency and severely impairing the quality of the weld.

### SUMMARY

In view of the above problems, this application provides a battery unit. The battery unit can be mounted more conveniently and can ensure reliability of connection between an adapter strip assembly and an electrode terminal of the battery unit.

This application further discloses a battery module containing the battery unit.

This application further discloses an electrical device containing the battery module.

According to a first aspect, this application provides a battery unit. The battery unit includes: a housing, where the housing is provided with a first electrode terminal and a second electrode terminal; at least one battery cell, where the battery cell is disposed in the housing and includes a first electrode plate and a second electrode plate, and the second electrode terminal is connected to the second electrode plate; and an adapter strip assembly, where the adapter strip assembly is sandwiched between the housing and the battery cell and includes a first adapter strip and a first bracket, and the first adapter strip is supported on the first bracket and connected to the first electrode terminal and the first electrode plate.

In the technical solution of this embodiment of this application, the first adapter strip is disposed on the first bracket. After the first electrode plate of the battery cell is connected to the first adapter strip, the first bracket can fix the first adapter strip, thereby making it convenient to mount the adapter strip assembly into the housing of the battery unit. After the battery cell equipped with the adapter strip assembly is mounted into the housing of the battery unit, the first bracket can support the first adapter strip, thereby making it convenient to connect the first electrode terminal and the first adapter strip, improving the mounting efficiency of the adapter strip assembly, and in turn, improving the production efficiency of the battery unit.

In some embodiments, the first bracket is molded by an injection molding process in which the first adapter strip is an insertion piece. This arrangement ensures reliability of the connection between the two components, thereby ensuring structural stability of the adapter strip assembly, facilitating molding, making it easy to implement the structure without a need for redundant connection structures, reducing the number of components, and reducing cost and assembly difficulty.

In some embodiments, the first adapter strip is detachably connected to the first bracket. This arrangement not only enables the position of the first adapter strip on the first bracket to be adjusted as required, but also facilitates repair and replacement of the first adapter strip that fails.

In some embodiments, the first adapter strip is connected to the first bracket by snap-fitting or by a fastener, thereby not only ensuring reliability of the connection between the first adapter strip and the first bracket, but also facilitating assembly and disassembly and improving the efficiency of assembly and disassembly.

In some embodiments, the first bracket includes: a first mounting plate; and at least one second mounting plate. The second mounting plate is connected to the first mounting plate. At least a part of the first adapter strip is sandwiched between the first mounting plate and the second mounting plate. With the first bracket designed into the above structure, it is convenient to mount and detach the first adapter strip onto and from the first bracket, thereby improving production efficiency, and making the structure simple and easy to implement.

In some embodiments, among the first mounting plate and the second mounting plate, one is provided with a fixing hole, and the other is provided with a fixing portion. The fixing portion fits the fixing hole. This arrangement ensures reliability of the connection between the first mounting plate and the second mounting plate, thereby ensuring the reliability and stability of the mounting of the first adapter strip on the first bracket.

In some embodiments, among the first mounting plate and the second mounting plate, one is provided with a first positioning hole, and the other is provided with a positioning portion. At least a part of the first adapter strip is provided with a second positioning hole, and the positioning portion fits the first positioning hole and the second positioning hole. The positioning portion not only ensures reliability of the connection between the first mounting plate and the second mounting plate, but also defines the position of the first adapter strip to avoid displacement of the first adapter strip, thereby further ensuring the mounting reliability and stability of the first adapter strip.

In some embodiments, both ends of the first adapter strip are connected to the first bracket. The first bracket can effectively support the first adapter strip, thereby facilitating the fixing of the first adapter strip and facilitating mounting into the housing of the battery unit.

In some embodiments, the first bracket includes at least one fixing groove, and at least one end of the first adapter strip fits a corresponding fixing groove. Because at least one end of the first adapter strip is inserted into the fixing groove, the first adapter strip can be prevented from falling off the first bracket, thereby further ensuring the mounting reliability of the first adapter strip on the first bracket.

In some embodiments, the first adapter strip includes: an electrode terminal connecting portion; and an electrode plate connecting portion. The electrode plate connecting portion is connected to the electrode terminal connecting portion. Both the electrode terminal connecting portion and the electrode plate connecting portion are connected to the first bracket. The first bracket can effectively support the electrode terminal connecting portion and the electrode plate connecting portion, thereby ensuring the reliability and convenience of the connection between the electrode terminal connecting portion and the first electrode terminal.

In some embodiments, one end of the electrode plate connecting portion is connected to one end of the electrode terminal connecting portion, and another end of the electrode plate connecting portion and another end of the electrode terminal connecting portion form two ends of the first adapter strip in a length direction respectively. The electrode plate connecting portion includes a plurality of connecting strips. An arrangement direction of the plurality of connecting strips is perpendicular to the length direction of the first adapter strip. The one end of the electrode terminal connecting portion is connected between two adjacent connecting strips, thereby electrically connecting the electrode plates of a plurality of battery cells to electrode terminals.

In some embodiments, the first electrode terminal and the second electrode terminal are disposed on the same sidewall or different sidewalls of the housing.

In some embodiments, the adapter strip assembly further includes a second adapter strip. The second electrode terminal is connected to the second electrode plate by the second adapter strip. By providing the second adapter strip, this application improves the convenience of connecting the second electrode terminal to the second electrode plate.

In some embodiments, among the first adapter strip and the second adapter strip, one is a copper strip, and the other is an aluminum strip. The copper strip and the aluminum strip are relatively conductive, relatively soft, and cost-effective, and are relatively stable in the air. Therefore, among the first adapter strip and the second adapter strip, one is set to be a copper strip and the other is an aluminum strip, thereby improving the conductivity and mounting convenience of the adapter strip assembly and reducing cost.

In some embodiments, the adapter strip assembly further includes a second bracket. The second adapter strip is supported on the second bracket. After the first electrode plate of the battery cell is connected to the first adapter strip and after the second electrode plate is connected to the second adapter strip, the second bracket can fix the second adapter strip, thereby making it convenient to mount the adapter strip assembly into the housing of the battery unit. After the battery cell equipped with the adapter strip assembly is mounted into the housing of the battery unit, the second bracket can support the second adapter strip, thereby making it convenient to connect the second electrode terminal and the second adapter strip, improving the mounting efficiency of the adapter strip assembly, and in turn, improving the production efficiency of the battery unit.

In some embodiments, the first bracket is provided with a first mounting orifice configured to avoid the first electrode terminal and the first electrode plate. Both ends of the first adapter strip are connected to an edge of the first mounting orifice. The second bracket is provided with a second mounting orifice configured to avoid the second electrode terminal and the second electrode plate. Both ends of the second adapter strip are connected to an edge of the mounting orifice. Due to the first mounting orifice, the first bracket can avoid the first electrode terminal and the first electrode plate. In this way, the first adapter strip can contact the first electrode terminal and the first electrode plate separately, so as to electrically connect the first electrode terminal to the first electrode plate. Due to the second mounting orifice, the second bracket can avoid the second electrode terminal and the second electrode plate, and the second adapter strip can contact the second electrode terminal and the second electrode plate separately, so as to electrically connect the second electrode terminal to the second electrode plate.

In some embodiments, the adapter strip assembly includes a supporting stand extending along a first direction. The supporting stand includes a first bracket and a second bracket. The first bracket and the second bracket are arranged in the first direction and connected to each other, so that the first bracket and the second bracket are disposed on the same side of the battery cell, thereby not only making it convenient to mount the battery cell equipped with the adapter strip assembly into the housing of the battery unit, but also facilitating the connection between the first electrode terminal and the first adapter strip as well as the connection between the second electrode terminal and the second adapter strip.

In some embodiments, both ends of the first adapter strip in a second direction are connected to an edge of the first mounting orifice; and/or, both ends of the second adapter strip in a second direction are connected to an edge of the second mounting orifice, and the second direction is perpendicular to the first direction. In this way, a supporting structure configured to fix the first adapter strip and the second adapter strip does not need to be disposed in the middle of the supporting stand, thereby simplifying the structure of the supporting stand while ensuring that the supporting stand can effectively support the first adapter strip and the second adapter strip.

In some embodiments, both ends of the first adapter strip in the first direction are connected to an edge of the first mounting orifice; and/or, both ends of the second adapter strip in the first direction are connected to an edge of the second mounting orifice. By fixing both ends of the first adapter strip and both ends of the second adapter strip in this way, this application enables the first adapter strip and the second adapter strip to be connected to a common supporting portion, thereby reducing the number of supporting portions in the supporting stand, and in turn, simplifying the structure of the bracket and reducing the difficulty of processing.

In some embodiments, the housing is provided with a mounting wall. The mounting wall is provided with a first opening and a second opening. The first electrode terminal is disposed at the first opening, and the second electrode terminal is disposed at the second opening. The battery cell is disposed opposite to the mounting wall. The adapter strip assembly is sandwiched between the mounting wall and the battery cell. With the mounting wall provided with the first opening and the second opening, both the first electrode terminal and the second electrode terminal are disposed on the mounting wall. In this way, the first adapter strip and the second adapter strip can be correspondingly disposed on the same side of the battery cell, thereby not only making it convenient to mount the battery cell equipped with the adapter strip assembly into the housing of the battery unit, but also facilitating the connection between the first electrode terminal and the first adapter strip as well as the connection between the second electrode terminal and the second adapter strip.

In some embodiments, the housing includes: a housing body, where one end of the housing body is provided with an opening; and an end cap, where the end cap is disposed on the housing body to open and close the opening. The mounting wall is disposed at another end of the housing body and is disposed opposite to the opening. The mounting wall and a sidewall of the housing body are formed in one piece. In this way, the battery cell equipped with the adapter strip assembly can enter the housing from the opening. When the battery cell is mounted in place in the housing, the adapter strip assembly directly faces the mounting wall. In this way, the first adapter strip can be connected to the first electrode terminal on the mounting wall, and the second adapter strip can be connected to the second electrode terminal on the mounting wall. The end cap can not only ensure the hermeticity of the housing and prevent leakage of the electrolyte solution, but also protect the battery cell.

In some embodiments, the first adapter strip is connected to the first electrode terminal, and the second adapter strip is connected to the second electrode terminal, both by a penetration welding process. In this way, the first electrode terminal is electrically connected to the first electrode plate, and the second electrode terminal is electrically connected to the second electrode plate, thereby improving the mounting efficiency of the adapter strip assembly, and in turn, improving the production efficiency of the battery unit.

In some embodiments, the first electrode terminal is provided with a first recess recessed toward the first adapter strip. A bottom wall of the first recess is welded to the first adapter strip. A first cover is disposed at an opening of the first recess. With the first recess provided, the bottom wall of the first recess can be welded to the first adapter strip from the first recess, and then the first electrode terminal is electrically connected to the first electrode plate by the bottom wall of the first recess. With the first cover provided, the opening of the first recess can be closed by using the first cover, thereby not only preventing debris from entering the first recess, but also protecting a junction between the first electrode terminal and the first adapter strip.

In some embodiments, the second electrode terminal is provided with a second recess recessed toward the second adapter strip. A bottom wall of the second recess is welded to the second adapter strip. A second cover is disposed at an opening of the second recess. With the second recess provided, the bottom wall of the second recess can be welded to the second adapter strip from the second recess, and then the second electrode terminal is electrically connected to the second electrode plate by the bottom wall of the second recess. With the second cover provided, the opening of the second recess can be closed by using the second cover, thereby not only preventing debris from entering the second recess, but also protecting the junction between the second electrode terminal and the second adapter strip.

In some embodiments, a sealing element is disposed between the first electrode terminal and an edge of the first opening, and between the second electrode terminal and an edge of the second opening, thereby ensuring hermeticity of the fit between the first electrode terminal and the edge of the first opening.

According to a second aspect, this application provides a battery module. The battery module includes the battery unit disclosed in the above embodiment.

In the technical solution of this embodiment of this application, the battery module includes the above battery unit, thereby improving the production efficiency of the battery module.

According to a third aspect, this application provides an electrical device. The electrical device includes the battery module disclosed in the above embodiment.

In the technical solution of this embodiment of this application, the electrical device includes the above battery module, thereby improving the production efficiency of the electrical device.

Additional aspects and advantages of this application will be partly given in the following description, and a part thereof will become evident in the following description or will be learned in the practice of this application.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of an adapter strip assembly of a battery unit according to some embodiments of this application;
FIG. 2 is a structural exploded view of an adapter strip assembly of the battery unit shown in FIG. 1;
FIG. 3 is a close-up view of an adapter strip assembly of the battery unit shown in FIG. 2;
FIG. 4 is a schematic structural diagram of an adapter strip assembly of a battery unit according to some embodiments of this application;
FIG. 5 is a structural exploded view of an adapter strip assembly of the battery unit shown in FIG. 4;
FIG. 6 is a close-up view of an adapter strip assembly of the battery unit shown in FIG. 5;
FIG. 7 is a schematic structural diagram of a battery unit according to some embodiments of this application;
FIG. 8 is a structural exploded view of the battery unit shown in FIG. 7;
FIG. 9 is a structural cross-sectional view of the battery unit shown in FIG. 7;
FIG. 10 is a close-up view of the battery unit shown in FIG. 9; and
FIG. 11 is a close-up view of the battery unit shown in FIG. 9.

List of reference numerals:
battery unit 1, adapter strip assembly 100, clearance opening 101,
supporting stand 11, first mounting region 1101, second mounting region 1102, first bracket 1103, second bracket 1104, first mounting plate 111, second mounting plate 112,
fixing hole 113, fixing portion 114, first positioning hole 115, positioning portion 116, fixing groove 117,
first mounting orifice 1181, second mounting orifice 1182, supporting portion 119,
first adapter strip 12, second adapter strip 13,
electrode terminal connecting portion 141, second positioning hole 1411, electrode plate connecting portion 142, connecting strip 1421,
housing 200,
housing body 21, opening 210, first opening 211, second opening 212, mounting wall 213, injection hole 2130, sidewall 214, end cap 22,
first electrode terminal 31, first recess 310, second electrode terminal 32, second recess 320,
battery cell 40, first electrode plate 41, second electrode plate 42,
first cover 51, second cover 52,
sealing element 60,
first plastic seal 71, second plastic seal 72, first communicating opening 721, a second communicating opening 722,
insulation strip 80.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as nonexclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

Currently, in the field of new energy batteries, welding an adapter strip body is an indispensable process. The purpose of the welding is to connect an electrode post on a top cover of a battery to a tab of a battery cell inside the battery to conduct electrical current.

The secondary battery disclosed in literature CN109713353B includes a housing, an electrode assembly, a top cover assembly, and an adapter strip. The top cover assembly includes a top cover sheet and an electrode terminal fixed onto the top cover sheet. The adapter strip includes a main portion and a protruding portion. The main portion is connected to a tab of the electrode assembly. The protruding portion extends from an adapter strip lead-out hole on the top cover sheet to a position beyond an electrode terminal surface, so as to be welded to the electrode terminal.

However, the main portion of the adapter strip is connected to a lower part of the tab, thereby producing an effect that the adapter strip is suspended. In welding the electrode terminal and the protruding portion, the adapter strip is prone to deform downward under the action of the gravity of the adapter strip and a downward thrust force, thereby resulting in welding deficiency and severely impairing the quality of the weld. In addition, because the weld between the protruding portion and the electrode terminal is exposed, the weld is prone to fail.

In view of this, an embodiment of this application provides a battery unit that includes an adapter strip assembly. In connecting a first electrode terminal and a first adapter strip, the first bracket can support the first adapter strip, thereby facilitating the fixing of the first adapter strip, making it convenient to mount the adapter strip assembly into the housing of the battery unit, and ensuring reliability of the connection between the adapter strip assembly and the electrode terminal of the battery unit.

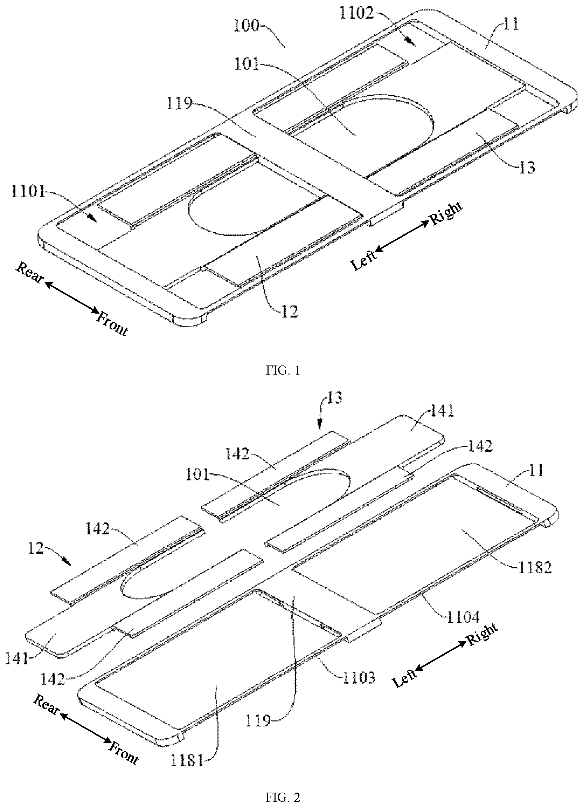

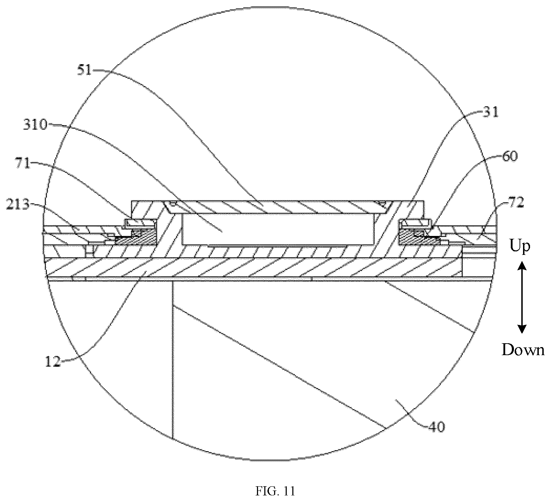

The following describes a battery unit 1 according to an embodiment of this application with reference to FIG. 1 and FIG. 11.

As shown in FIG. 1 to FIG. 11, the battery unit 1 according to an embodiment of this application includes a housing 200, at least one battery cell 40, and an adapter strip assembly 100.

The housing 200 is provided with a first electrode terminal 31 and a second electrode terminal 32. The battery cell 40 is disposed in the housing 200. The adapter strip assembly 100 includes a first adapter strip 12. The first adapter strip 12 is connected to the first electrode terminal 31 and the first electrode plate 41 of the battery cell 40, so as to electrically connect the first electrode terminal 31 to the first electrode plate 41.

The adapter strip assembly 100 is sandwiched between the housing 200 and the battery cell 40. The adapter strip assembly further includes a first bracket 1103. The first adapter strip 12 is supported on the first bracket 1103.

In the technical solution of this embodiment of this application, the first adapter strip 12 is disposed on the first bracket 1103. After the first electrode plate 41 of the battery cell 40 is connected to the first adapter strip 12, the first bracket 1103 can fix the first adapter strip 12, thereby making it convenient to mount the adapter strip assembly 100 into the housing 200 of the battery unit 1. After the battery cell 40 equipped with the adapter strip assembly 100 is mounted into the housing 200 of the battery unit 1, the first bracket 1103 can support the first adapter strip 12, thereby making it convenient to connect the first electrode terminal 31 and the first adapter strip 12, improving the mounting efficiency of the adapter strip assembly 100, and in turn, improving the production efficiency of the battery unit 1.

As shown in FIG. 1 to FIG. 3, in some embodiments, the first bracket 1103 is molded by an injection molding process in which the first adapter strip 12 is an insertion piece. This arrangement ensures reliability of the connection between the two components, thereby ensuring structural stability of the adapter strip assembly 100, facilitating molding, making it easy to implement the structure without a need for redundant connection structures, reducing the number of components, and reducing cost and assembly difficulty.

Specifically, a mold corresponding to the shape of the adapter strip assembly 100 may be made first, and then the first adapter strip 12 is placed at a preset position, and a molten material is injected into the mold. After the molten material cools down and solidifies, the first bracket 1103 is molded on the first adapter strip 12, thereby implementing the connection between the first bracket 1103 and the first adapter strip 12.

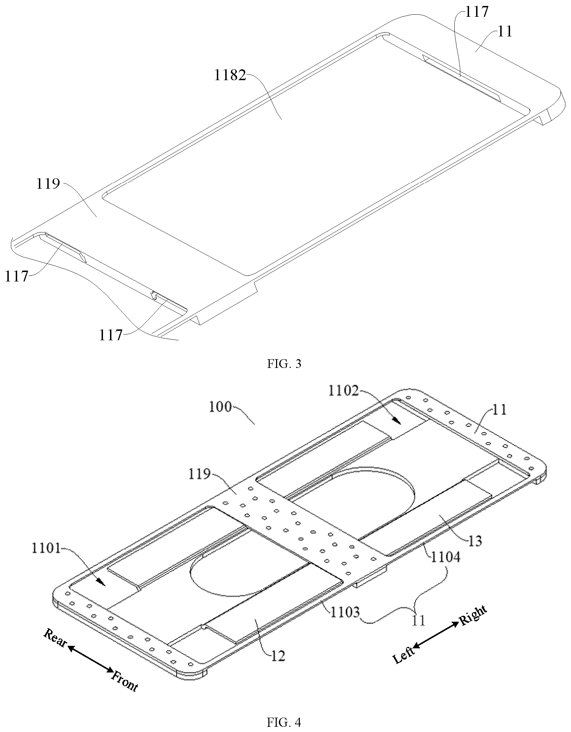

As shown in FIG. 4 to FIG. 6, in some embodiments, the first adapter strip 12 is detachably connected to the first bracket 1103.

This arrangement not only enables the position of the first adapter strip 12 on the first bracket 1103 to be adjusted as required, but also facilitates repair and replacement of the first adapter strip 12 that fails.

In some embodiments, the first adapter strip 12 is connected to the first bracket 1103 by snap-fitting, thereby not only ensuring reliability of the connection between the first adapter strip 12 and the first bracket 1103, but also facilitating assembly and disassembly and improving the efficiency of assembly and disassembly.

For example, one of the first adapter strip 12 or the first bracket 1103 is provided with a first buckle, and the other of the first adapter strip 12 or the first bracket 1103 is provided with a first snap hole that is in snap fit with the first buckle.

In other embodiments, the first adapter strip 12 is connected to the first bracket 1103 by a fastener, thereby ensuring reliable connection and convenient operation.

For example, a first connecting hole is created on the first adapter strip 12, and a first mating hole is created on the first bracket 1103. The first adapter strip 12 is connected to the first bracket 1103 by a first fastener. The first fastener is inserted in the first connecting hole and the first mating hole.

As shown in FIG. 4 to FIG. 6, in some embodiments, the first bracket 1103 includes a first mounting plate 111 and at least one second mounting plate 112. The second mounting plate 112 is connected to the first mounting plate 111. At least a part of the first adapter strip 12 is sandwiched between the first mounting plate 111 and the second mounting plate 112, so as to fix the first adapter strip 12 onto the first bracket 1103.

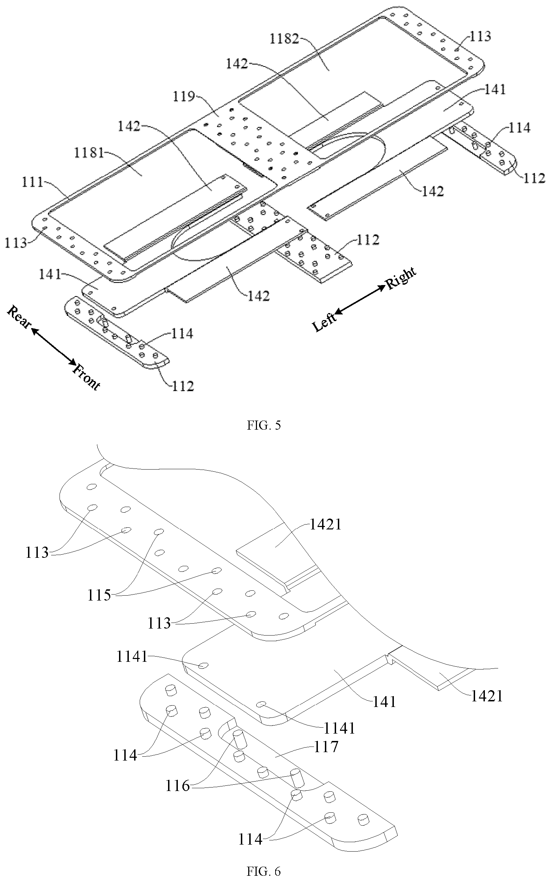

In some specific embodiments, the first bracket 1103 includes a first mounting plate 111 and two second mounting plates 112. The two second mounting plates 112 are spaced apart in the length direction of the first mounting plate 111 (the left-right direction shown in FIG. 5).

One end of the first adapter strip 12 is sandwiched between one of the second mounting plates 112 and the first mounting plate 111. The other end of the first adapter strip 12 is sandwiched between the other of the second mounting plates 112 and the first mounting plate 111.

In this way, with the first bracket 1103 designed into the above structure, it is convenient to mount and detach the first adapter strip 12 onto and from the first bracket 1103, thereby improving production efficiency, and making the structure simple and easy to implement.

As shown in FIG. 5 and FIG. 6, in some embodiments, one of the first mounting plate 111 or the second mounting plate 112 is provided with a fixing hole 113, and the other of the first mounting plate 111 or the second mounting plate 112 is provided with a fixing portion 114. The fixing portion 114 fits the fixing hole 113.

The fixing portion 114 may form a fixing rod corresponding to the shape of the fixing hole 113. The fixing rod is inserted into the fixing hole 113, and the fixing rod is in interference fit with the fixing hole 113 to prevent the fixing rod from detaching from the fixing hole 113, thereby ensuring reliability of the connection between the first mounting plate 111 and the second mounting plate 112, and in turn, ensuring reliability and stability of the mounting of the first adapter strip 12 on the first bracket 1103.

In some specific embodiments, a plurality of fixing portions 114 are provided on each second mounting plate 112. A plurality of fixing holes 113 are provided at positions located on the first mounting plate 111 and corresponding to the second mounting plate 112. The plurality of fixing portions 114 are in plug-in fit with the plurality of fixing holes 113 in a one-to-one correspondence, thereby further ensuring reliability of the connection between the second mounting plate 112 and the first mounting plate 111, and in turn, ensuring the reliability and stability of the mounting of the first adapter strip 12 on the first bracket 1103.

As shown in FIG. 5 and FIG. 6, in some embodiments, one of the first mounting plate 111 or the second mounting plate 112 is provided with a first positioning hole 115, and the other of the first mounting plate 111 or the second mounting plate 112 is provided with a positioning portion 116. At least a part of the first adapter strip 12 is provided with a second positioning hole 1411. The positioning portion 116 fits the first positioning hole 115 and the second positioning hole 1411.

In this way, with the first positioning hole 115 provided on one of the first mounting plate 111 or the second mounting plate 112, with the positioning portion 116 provided on the other of the first mounting plate or the second mounting plate, and with the second positioning hole 1411 provided on the first adapter strip 12, the positioning portion 116 not only ensures reliability of the connection between the first mounting plate 111 and the second mounting plate 112, but also defines the position of the first adapter strip 12 to avoid displacement of the first adapter strip 12, thereby further ensuring the mounting reliability and stability of the first adapter strip 12.

The positioning portion 116 can form a positioning rod corresponding to the shape of the first positioning hole 115 and the second positioning hole 1411. The positioning rod is inserted into the first positioning hole 115 and the second positioning hole 1411. The positioning rod is in interference fit with the first positioning hole 115 and the second positioning hole 1411 to prevent the positioning rod from detaching from the first positioning hole 115 and the second positioning hole 1411, thereby ensuring reliability of the connection between the first bracket 1103 and the first adapter strip 12.

In some specific embodiments, a plurality of positioning portions 116 are provided on each second mounting plate 112. A plurality of first positioning holes 115 are provided at positions located on the first mounting plate 111 and corresponding to the second mounting plate 112. The plurality of positioning portions 116 are in plug-in fit with the plurality of first positioning holes 115 in a one-to-one correspondence, thereby further ensuring reliability of the connection between the second mounting plate 112 and the first mounting plate 111.

Furthermore, a plurality of second positioning holes 1411 are provided on the first adapter strip 12. The plurality of positioning portions 116 are further in plug-in fit with the plurality of second positioning holes 1411 in a one-to-one correspondence, thereby further ensuring reliability of the connection between the first bracket 1103 and the first adapter strip 12.

In some embodiments, both ends of the first adapter strip 12 are connected to the first bracket 1103. The first bracket 1103 can effectively support the first adapter strip 12, thereby facilitating the fixing of the first adapter strip 12 and facilitating mounting into the housing 200 of the battery unit 1.

In some embodiments, the first bracket 1103 includes at least one fixing groove 117. At least one end of the first adapter strip 12 fits a corresponding fixing groove 117. Because at least one end of the first adapter strip 12 is inserted into the fixing groove 117, the first adapter strip 12 can be prevented from falling off the first bracket 1103, thereby further ensuring the mounting reliability of the first adapter strip 12 on the first bracket 1103.

In some embodiments, the first electrode terminal 31 and the second electrode terminal 32 are disposed on the same sidewall of the housing 200. For example, both the first electrode terminal 31 and the second electrode terminal 32 are disposed on the top wall or sidewall of the housing 200, thereby not only making it convenient to mount the battery cell 40 equipped with the adapter strip assembly 100 into the housing 200 of the battery unit 1, but also facilitating the connection between the first electrode terminal 31 and the first electrode plate as well as the connection between the second electrode terminal 32 and the second electrode plate.

In some embodiments, the first electrode terminal 31 and the second electrode terminal 32 are disposed on different sidewalls of the housing 200. The positions of the first electrode terminal 31 and the second electrode terminal 32 may be selected as required.

In some embodiments, the adapter strip assembly 100 further includes a second adapter strip 13. The second adapter strip 13 is connected to the second electrode terminal 32 and the second electrode plate 42 of the battery cell 40, so as to electrically connect the second electrode terminal 32 to the second electrode plate 42. By providing the second adapter strip 13, this application improves the convenience of connecting the second electrode terminal 32 to the second electrode plate.

In some embodiments, one of the first adapter strip 12 or the second adapter strip 13 is a copper strip, and the other of the first adapter strip 12 or the second adapter strip 13 is an aluminum strip. The copper strip and the aluminum strip are relatively conductive, relatively soft, and cost-effective, and are relatively stable in the air. Therefore, among the first adapter strip 12 and the second adapter strip 13, one is set to be a copper strip and the other is an aluminum strip, thereby improving the conductivity and mounting convenience of the adapter strip assembly 100 and reducing cost.

In some embodiments, the adapter strip assembly 100 further includes a second bracket 1104. The second adapter strip 13 is supported on the second bracket 1104.

In this way, the second adapter strip 13 is disposed on the second bracket 1104. After the first electrode plate 41 of the battery cell 40 is connected to the first adapter strip 12, the second electrode plate 42, and the second adapter strip 13, the second bracket 1104 can fix the second adapter strip 13, thereby making it convenient to mount the adapter strip assembly 100 into the housing 200 of the battery unit 1. After the battery cell 40 equipped with the adapter strip assembly 100 is mounted into the housing 200 of the battery unit 1, the second bracket 1104 can support the second adapter strip 13, thereby making it convenient to connect the second electrode terminal 32 and the second adapter strip 13, improving the mounting efficiency of the adapter strip assembly 100, and in turn, improving the production efficiency of the battery unit 1.

The structure of the second bracket 1104 is the same as the structure of the first bracket 1103. In other words, the connection manner between the second adapter strip 13 and the second bracket 1104 as well as the connection manner between the first adapter strip 12 and the first bracket 1103 may be the same.

In some embodiments, one of the second adapter strip 13 or the second bracket 1104 is provided with a second buckle, and the other of the second adapter strip 13 or the second bracket 1104 is provided with a second snap hole that is in snap fit with the second buckle.

In some other embodiments, a second connecting hole is created on the second adapter strip 13, and a second mating hole is created on the second bracket 1104. The second adapter strip 13 is connected to the second bracket 1104 by a second fastener. The second fastener is inserted in the second connecting hole and the second mating hole.

The connection manner between the first adapter strip 12 and the first bracket 1103 may be the same as or different from the connection manner between the second adapter strip 13 and the second bracket 1104. For example, the first adapter strip 12 is connected to the first bracket 1103 by snap-fitting, and the second adapter strip 13 is connected to the second bracket 1104 by a fastener. The specific connection manner may be made according to actual conditions.

In some embodiments, the first bracket 1103 is provided with a first mounting orifice 1181, and the first mounting orifice 1181 is configured to avoid the first electrode terminal 31 and the first electrode plate 41. Both ends of the first adapter strip 12 are connected to an edge of the first mounting orifice 1181. The second bracket 1104 is provided with a second mounting orifice 1182, and the second mounting orifice 1182 is configured to avoid the second electrode terminal 32 and the second electrode plate 42. Both ends of the second adapter strip 13 are connected to an edge of the second mounting orifice 1182.

In other words, the first adapter strip 12 is disposed at the first mounting orifice 1181, and the second adapter strip 13 is disposed at the second mounting orifice 1182.

Due to the first mounting orifice 1181, the first bracket 1103 can avoid the first electrode terminal 31 and the first electrode plate 41. In this way, the first adapter strip 12 can contact the first electrode terminal 31 and the first electrode plate 41 separately, so as to electrically connect the first electrode terminal 31 to the first electrode plate 41.

Similarly, due to the second mounting orifice 1182, the second bracket 1104 can avoid the second electrode terminal 32 and the second electrode plate 42, and the second adapter strip 13 can contact the second electrode terminal 32 and the second electrode plate 42 separately, so as to electrically connect the second electrode terminal 32 to the second electrode plate 42.

In some embodiments, the adapter strip assembly 100 includes a supporting stand 11. The supporting stand 11 extends along a first direction. The supporting stand 11 includes a first mounting region 1101 and a second mounting region 1102. The first mounting region 1101 and the second mounting region 1102 are arranged in the first direction.

The supporting stand 11 includes a first bracket 1103 and a second bracket 1104. The first bracket 1103 and the second bracket 1104 are arranged in the first direction and connected together. The first mounting region 1101 is located at the first bracket 1103, and the second mounting region 1102 is located at the second bracket 1104.

In other words, the first bracket 1103 and the second bracket 1104 are disposed on the same side of the battery cell 40, thereby not only making it convenient to mount the battery cell 40 equipped with the adapter strip assembly 100 into the housing 200 of the battery unit 1, but also facilitating the connection between the first electrode terminal 31 and the first adapter strip 12 as well as the connection between the second electrode terminal 32 and the second adapter strip 13.

In some embodiments, both ends of the first adapter strip 12 in the second direction are connected to the edge of the first mounting orifice 1181. The second direction is perpendicular to the first direction. Both ends of the second adapter strip 13 in the second direction are connected to the edge of the second mounting orifice 1182. In this way, a supporting structure configured to fix the first adapter strip 12 and the second adapter strip 13 does not need to be disposed in the middle of the supporting stand 11, thereby simplifying the structure of the supporting stand 11 while ensuring that the supporting stand 11 can effectively support the first adapter strip 12 and the second adapter strip 13.

Because this embodiment is not shown in the drawings, in order to facilitate the description of this embodiment, it is defined that the left-right direction in FIG. 1 is a first direction, and the front-rear direction in FIG. 1 is a second direction.

The two ends of the first adapter strip 12 in the front-rear direction may be connected to the front edge and the rear edge of the first mounting orifice 1181 respectively. In other words, the two ends of the first adapter strip 12 in the front-rear direction are fixed to the first bracket 1103. In this way, the first bracket 1103 can effectively support the first adapter strip 12, thereby facilitating the fixing of the first adapter strip 12 and facilitating mounting into the housing 200 of the battery unit 1.

Similarly, the two ends of the second adapter strip 13 in the front-rear direction may be connected to the front edge and the rear edge of the second mounting orifice 1182 respectively. In other words, the two ends of the second adapter strip 13 in the front-rear direction are fixed to the second bracket 1104. In this way, the second bracket 1104 can effectively support the second adapter strip 13, thereby facilitating the fixing of the second adapter strip 13 and facilitating mounting into the housing 200 of the battery unit 1.

As shown in FIG. 1 to FIG. 6, in some embodiments, the middle portion of the supporting stand 11 includes a supporting portion 119 to separate the first mounting orifice 1181 from the second mounting orifice 1182. The first mounting orifice 1181 and the second mounting orifice 1182 are arranged in the first direction. Both ends of the first adapter strip 12 are connected to the edge of the first mounting orifice 1181. Both ends of the second adapter strip 13 are connected to the edge of the second mounting orifice 1182.

In this way, with the supporting portion 119 provided, the supporting portion 119 can be used to partition the supporting stand 11, so that the fixing direction of the first adapter strip 12 and the second adapter strip 13 can be selected as needed. In addition, the supporting portion 119 can increase the structural strength of the supporting stand 11 to prevent the supporting stand 11 from deforming.

In some embodiments, both ends of the first adapter strip 12 in the first direction are connected to the edge of the first mounting orifice 1181, and both ends of the second adapter strip 13 in the first direction are connected to the edge of the second mounting orifice 1182.

In other words, one end of the first adapter strip 12 in the first direction is connected to one end of the supporting stand 11, another end of the first adapter strip 12 in the first direction is connected to the supporting portion 119; one end of the second adapter strip 13 in the first direction is connected to another end of the supporting stand 11, and another end of the second adapter strip 13 in the first direction is connected to the supporting portion 119.

Therefore, by fixing both ends of the first adapter strip 12 and both ends of the second adapter strip 13 in this way, this application enables the first adapter strip 12 and the second adapter strip 13 to be jointly connected to the supporting portion 119, thereby reducing the number of supporting portions 119 in the supporting stand 11, and in turn, simplifying the structure of the bracket 11 and reducing the difficulty of processing.

As shown in FIG. 5, in this embodiment, the supporting stand 11 includes a first mounting plate 111 and three second mounting plates 112. The three second mounting plates 112 are spaced apart in the length direction of the first mounting plate 111 (for example, the left-right direction shown in FIG. 5).

One end of the first adapter strip 12 is sandwiched between the second mounting plate 112 on the left side and one end of the first mounting plate 111, and one end of the second adapter strip 13 is sandwiched between the second mounting plate 112 on the right side and another end of the first mounting plate 111. Another end of the first adapter strip 12 and another end of the second adapter strip 13 are both sandwiched between the second mounting plate 112 located in the middle and the middle portion of the first mounting plate 111.

In this way, with the supporting stand 11 designed into the above structure, it is convenient to mount and detach the first adapter strip 12 and/or the second adapter strip 13 onto and from the supporting stand 11, thereby improving production efficiency, and making the structure simple and easy to implement.

In some embodiments, the first adapter strip 12 includes an electrode terminal connecting portion 141 and an electrode plate connecting portion 142. The electrode plate connecting portion 142 is connected to the electrode terminal connecting portion 141. Both the electrode terminal connecting portion 141 and the electrode plate connecting portion 142 are connected to the first bracket 1103.

In other words, the first bracket 1103 can effectively support the electrode terminal connecting portion 141 and the electrode plate connecting portion 142 of the first adapter strip 12, thereby ensuring the reliability and convenience of the connection between the electrode terminal connecting portion 141 of the first adapter strip 12 and the first electrode terminal 31.

In an embodiment in which the adapter strip assembly 100 includes a second bracket 1104, the second adapter strip 13 includes an electrode terminal connecting portion 141 and an electrode plate connecting portion 142. The electrode plate connecting portion 142 is connected to the electrode terminal connecting portion 141. Both the electrode terminal connecting portion 141 and the electrode plate connecting portion 142 are connected to the second bracket 1104. The second bracket 1104 can effectively support the electrode terminal connecting portion 141 and the electrode plate connecting portion 142 of the second adapter strip 13, thereby ensuring the reliability and convenience of the connection between the electrode terminal connecting portion 141 of the second adapter strip 13 and the second electrode terminal 32.

In some embodiments, one end of the electrode plate connecting portion 142 is connected to one end of the electrode terminal connecting portion 141, and another end of the electrode plate connecting portion 142 and another end of the electrode terminal connecting portion 141 form two ends of the first adapter strip 12 in the length direction respectively. The electrode plate connecting portion 142 includes a plurality of connecting strips 1421. An arrangement direction of the plurality of connecting strips 1421 is perpendicular to the first direction. The one end of the electrode terminal connecting portion 141 is connected between two adjacent connecting strips 1421.

The structure of the first adapter strip 12 may be the same as the structure of the second adapter piece 13.

Specifically, as shown in FIG. 5 and FIG. 6, in this embodiment, the electrode terminal connecting portion 141 of the first adapter strip 12 includes one connecting strip 1421 on two sides in the second direction separately. Each connecting strip 1421 of the first adapter strip 12 may be connected to the first electrode plate 41 of the battery cell 40. The electrode terminal connecting portion 141 of the second adapter strip 13 includes one connecting strip 1421 on two sides in the second direction separately. Each connecting strip 1421 of the second adapter strip 13 may be connected to the second electrode plate 42 of the battery cell 40, thereby connecting the two battery cells 40 to the adapter strip assembly 100. The electrode terminal connecting portion 141 of the first adapter strip 12 is connected to the first electrode terminal 31 of the battery unit 1, and the electrode terminal connecting portion 141 of the second adapter strip 13 is connected to the second electrode terminal 32 of the battery unit 1, so that the electrode plates of a plurality of battery cells can be electrically connected to the electrode terminals.

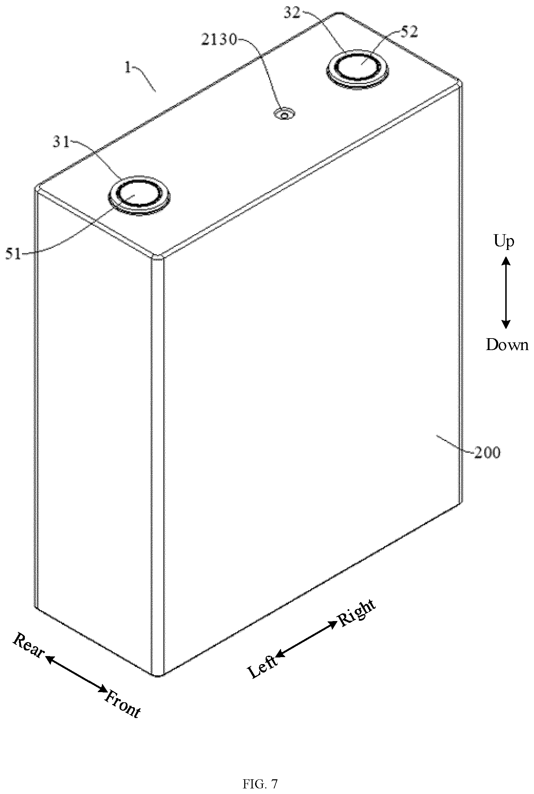

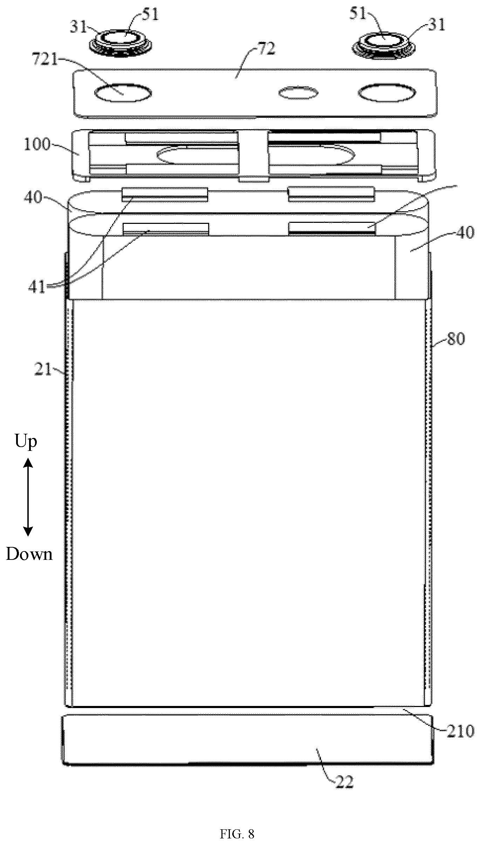

As shown in FIG. 7 and FIG. 8, in some embodiments, the housing 200 is provided with a mounting wall 213. The mounting wall 213 is provided with a first opening 211 and a second opening 212. Both the first opening 211 and the second opening 212 communicate to an inner cavity of the housing 200. The first electrode terminal 31 is disposed at the first opening 211. The second electrode terminal 32 is disposed at the second opening 212. The battery cell 40 is disposed in the housing 200. The battery cell 40 is disposed opposite to the mounting wall 213. The adapter strip assembly 100 is sandwiched between the mounting wall 213 and the battery cell 40.

The first adapter strip 12 is connected to the first electrode terminal 31 and the first electrode plate 41 of the battery cell 40, so as to electrically connect the first electrode terminal 31 to the first electrode plate 41. The second adapter strip 13 is connected to the second electrode terminal 32 and the second electrode plate 42 of the battery cell 40, so as to electrically connect the second electrode terminal 32 to the second electrode plate 42.

In this way, with the mounting wall 213 provided with the first opening 211 and the second opening 212, both the first electrode terminal 31 and the second electrode terminal 32 are disposed on the mounting wall 213. In this way, the first adapter strip 12 and the second adapter strip 13 can be correspondingly disposed on the same side of the battery cell 40, thereby not only making it convenient to mount the battery cell 40 equipped with the adapter strip assembly 100 into the housing 200 of the battery unit 1, but also facilitating the connection between the first electrode terminal 31 and the first adapter strip 12 as well as the connection between the second electrode terminal 32 and the second adapter strip 13.

As shown in FIG. 8, in some embodiments, the housing 200 includes a housing body 21. One end of the housing body 21 is provided with an opening 210. The mounting wall 213 is disposed at another end of the housing body 21. The mounting wall 213 is disposed opposite to the opening 210. The mounting wall 213 and a sidewall 214 of the housing body 21 are formed in one piece.

In this way, the battery cell 40 equipped with the adapter strip assembly 100 can enter the housing 200 from the opening 210. When the battery cell 40 is mounted in place in the housing 200, the adapter strip assembly 100 directly faces the mounting wall 213. In this way, the first adapter strip 12 can be connected to the first electrode terminal 31 on the mounting wall 213, and the second adapter strip 13 can be connected to the second electrode terminal 32 on the mounting wall 213.

Furthermore, the housing 200 further includes an end cap 22. The end cap 22 is disposed on the housing body 21. The end cap 22 is configured to open and close the opening 210, so that the battery cell 40 can be enclosed in the housing 200, thereby not only ensuring the hermeticity of the housing 200 and avoiding leakage of the electrolyte solution, but also protecting the battery cell 40.

In some embodiments, the first adapter strip 12 is connected to the first electrode terminal 31 by a penetration welding process, so that electrical connection is implemented between the first electrode terminal 31 and the first electrode plate 41.

Specifically, after the first electrode plate 41 of the battery cell 40 is welded to the first adapter strip 12, the first bracket 1103 can fix the first adapter strip 12, thereby making it convenient to mount the adapter strip assembly 100 into the housing 200 of the battery unit 1. After the battery cell 40 equipped with the adapter strip assembly 100 is mounted into the housing 200 of the battery unit 1, the first bracket 1103 can support the first adapter strip 12, thereby making it convenient to weld the first electrode terminal 31 and the first adapter strip 12, improving the mounting efficiency of the adapter strip assembly 100, and in turn, improving the production efficiency of the battery unit 1.

In some embodiments, the second adapter strip 13 is connected to the second electrode terminal 32 by a penetration welding process, so that electrical connection is implemented between the second electrode terminal 32 and the second electrode plate 42.

Specifically, in an embodiment in which the adapter strip assembly 100 includes a second bracket 1104, after the second electrode plate 42 of the battery cell 40 is welded to the second adapter strip 13, the second bracket 1104 can fix the second adapter strip 13, thereby making it convenient to mount the adapter strip assembly 100 into the housing 200 of the battery unit 1. After the battery cell 40 equipped with the adapter strip assembly 100 is mounted into the housing 200 of the battery unit 1, the second bracket 1104 can support the second adapter strip 13, thereby making it convenient to weld the second electrode terminal 32 and the second adapter strip 13, improving the mounting efficiency of the adapter strip assembly 100, and in turn, improving the production efficiency of the battery unit 1.

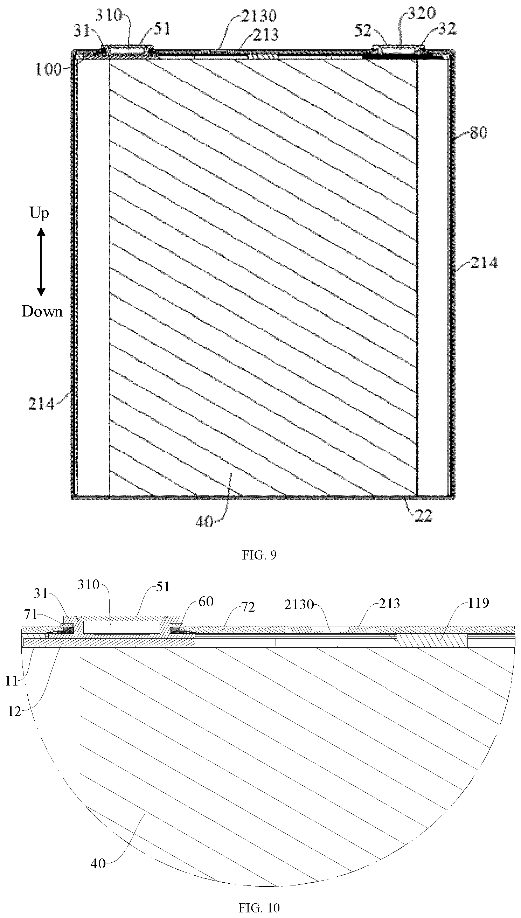

As shown in FIG. 9 to FIG. 11, in some embodiments, the first electrode terminal 31 is provided with a first recess 310. The first recess 310 is recessed toward the first adapter strip 12. A bottom wall of the first recess 310 is welded to the first adapter strip 12. With the first recess 310 provided on the first electrode terminal 31, the bottom wall of the first recess 310 can be welded to the first adapter strip 12 by way of the first recess 310. In this way, the first electrode terminal 31 is electrically connected to the first electrode plate 41 through the bottom wall of the first recess 310.

The first cover 51 is disposed at the opening of the first recess 310. With the first cover 51 provided at the opening of the first recess 310, the opening of the first recess 310 can be closed by using the first cover 51, thereby not only preventing debris from entering the first recess 310, but also protecting the junction between the first electrode terminal 31 and the first adapter strip 12.

In some embodiments, the second electrode terminal 32 is provided with a second recess 320. The second recess 320 is recessed toward the second adapter strip 13. A bottom wall of the second recess 320 is welded to the second adapter strip 13. With the second recess 320 provided on the second electrode terminal 32, the bottom wall of the second recess 320 can be welded to the second adapter strip 13 by way of the second recess 320. In this way, the second electrode terminal 32 is electrically connected to the second electrode plate 42 through the bottom wall of the second recess 320.

The second cover 52 is disposed at the opening of the second recess 320. With the second cover 52 provided at the opening of the second recess 320, the opening of the second recess 320 can be closed by using the second cover 52, thereby not only preventing debris from entering the second recess 320, but also protecting the junction between the second electrode terminal 32 and the second adapter strip 13.

As shown in FIG. 10, in some embodiments, an injection hole 2130 is provided on the mounting wall 213 of the housing 200. A clearance opening 101 is provided on the first adapter strip 12 or the second adapter strip 13. The clearance opening 101 corresponds to the position of the injection hole 2130. With the clearance opening 101 disposed, a clearance is formed for the injection hole 2130, thereby facilitating electrolyte injection.

As shown in FIG. 8, in some embodiments, the battery unit 1 further includes an insulation strip 80. The insulation strip 80 is disposed between the sidewall 214 of the housing 200 and the battery cell 40.

In some embodiments, a sealing element 60 is disposed between the first electrode terminal 31 and an edge of the first opening 211, thereby ensuring hermeticity of the fit between the first electrode terminal 31 and the edge of the first opening 211.

In some embodiments, a sealing element 60 is disposed between the second electrode terminal 32 and an edge of the second opening 212, thereby ensuring hermeticity of the fit between the second electrode terminal 32 and the edge of the second opening 212.

As shown in FIG. 10 to FIG. 11, according to some embodiments of this application, the battery unit 1 further includes two first plastic seals 71. One of the plastic seals 71 is sleeved around the first electrode terminal 31 and sandwiched between the first electrode terminal 31 and the outer surface of the mounting wall 213, thereby further ensuring the hermeticity of the fit between the first electrode terminal 31 and the mounting wall 213. In addition, the other first plastic seal 71 is sleeved around the second electrode terminal 32 and sandwiched between the second electrode terminal 32 and the outer surface of the mounting wall 213, thereby further ensuring the hermeticity of the fit between the second electrode terminal 32 and the mounting wall 213.

In some embodiments, the battery unit 1 further includes a second plastic seal 72. The second plastic seal 72 is sandwiched between the adapter strip assembly 100 and the inner surface of the mounting wall 213, thereby ensuring hermeticity of the fit between the adapter strip assembly 100 and the mounting wall 213.

A first communicating opening 721 and a second communicating opening 722 are created on the second plastic seal 72. The position of the first communicating opening 721 corresponds to the position of the first opening 211, and the position of the second communicating opening 722 corresponds to the position of the first opening 212. The sealing element 60 disposed between the first electrode terminal 31 and the edge of the first opening 211 is also in hermetic fit with the edge of the first communicating opening 721. The sealing element 60 disposed between the second electrode terminal 32 and the edge of the second opening 212 is also in hermetic fit with the edge of the second communicating opening 722.

The following describes a battery module according to an embodiment of this application with reference to drawings.

The battery module of this application includes the battery unit 1 disclosed in the above embodiment. In the technical solution of this embodiment of this application, the battery module includes the above battery unit 1, thereby improving the production efficiency of the battery module.

The following describes an electrical device according to an embodiment of this application with reference to drawings.

The electrical device of this application includes the battery module disclosed in the above embodiment. In the technical solution of this embodiment of this application, the electrical device includes the above battery module, thereby improving the production efficiency of the electrical device.

Understandably, other structures and operations of the battery unit 1, battery module, and electrical device according to some embodiments of this application are known to persons of ordinary skill in the art, and are not described in detail here.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery unit, comprising:
a housing, wherein the housing is provided with a first electrode terminal and a second electrode terminal;
at least one battery cell, wherein the battery cell is disposed in the housing and comprises a first electrode plate and a second electrode plate, and the second electrode terminal is connected to the second electrode plate; and
an adapter strip assembly, wherein the adapter strip assembly is sandwiched between the housing and the battery cell and comprises a first adapter strip and a first bracket, and the first adapter strip is supported on the first bracket and connected to the first electrode terminal and the first electrode plate.

2. The battery unit according to claim 1, wherein the first bracket is molded by an injection molding process in which the first adapter strip is an insertion piece.

3. The battery unit according to claim 1, wherein the first adapter strip is detachably connected to the first bracket.

4. The battery unit according to claim 3, wherein the first adapter strip is connected to the first bracket by snap-fitting or by a fastener.

5. The battery unit according to claim 3, wherein the first bracket comprises:
a first mounting plate; and
at least one second mounting plate, wherein the second mounting plate is connected to the first mounting plate, and at least a part of the first adapter strip is sandwiched between the first mounting plate and the second mounting plate.

6. The battery unit according to claim 5, wherein, among the first mounting plate and the second mounting plate, one is provided with a fixing hole, and the other is provided with a fixing portion, and the fixing portion fits the fixing hole.

7. The battery unit according to claim 5, wherein, among the first mounting plate and the second mounting plate, one is provided with a first positioning hole, and the other is provided with a positioning portion, at least a part of the first adapter strip is provided with a second positioning hole, and the positioning portion fits the first positioning hole and the second positioning hole.

8. The battery unit according to claim 1, wherein both ends of the first adapter strip are connected to the first bracket.

9. The battery unit according to claim 8, wherein the first bracket comprises at least one fixing groove, and at least one end of the first adapter strip fits a corresponding fixing groove.

10. The battery unit according to claim 1, wherein the first adapter strip comprises:
an electrode terminal connecting portion; and
an electrode plate connecting portion, wherein the electrode plate connecting portion is connected to the electrode terminal connecting portion, wherein
both the electrode terminal connecting portion and the electrode plate connecting portion are connected to the first bracket.

11. The battery unit according to claim 10, wherein one end of the electrode plate connecting portion is connected to one end of the electrode terminal connecting portion, and another end of the electrode plate connecting portion and another end of the electrode terminal connecting portion form two ends of the first adapter strip in a length direction respectively, wherein
the electrode plate connecting portion comprises a plurality of connecting strips, an arrangement direction of the plurality of connecting strips is perpendicular to the length direction of the first adapter strip, and the one end of the electrode terminal connecting portion is connected between two adjacent connecting strips.

12. The battery unit according to any one of claims 1 to 11, wherein the first electrode terminal and the second electrode terminal are disposed on a same sidewall or different sidewalls of the housing.

13. The battery unit according to any one of claims 1 to 11, wherein the adapter strip assembly further comprises a second adapter strip, and the second electrode terminal is connected to the second electrode plate by the second adapter strip.

14. The battery unit according to claim 13, wherein, among the first adapter strip and the second adapter strip, one is a copper strip, and the other is an aluminum strip.

15. The battery unit according to claim 13 or 14, wherein the adapter strip assembly further comprises a second bracket, and the second adapter strip is supported on the second bracket.

16. The battery unit according to claim 15, wherein the first bracket is provided with a first mounting orifice configured to avoid the first electrode terminal and the first electrode plate, and both ends of the first adapter strip are connected to an edge of the first mounting orifice; and
the second bracket is provided with a second mounting orifice configured to avoid the second electrode terminal and the second electrode plate, and both ends of the second adapter strip are connected to an edge of the mounting orifice.

17. The battery unit according to claim 16, wherein the adapter strip assembly comprises a supporting stand extending along a first direction, the supporting stand comprises a first bracket and a second bracket, and the first bracket and the second bracket are arranged in the first direction and connected to each other.

18. The battery unit according to claim 17, wherein both ends of the first adapter strip in a second direction are connected to an edge of the first mounting orifice; and/or, both ends of the second adapter strip in a second direction are connected to an edge of the second mounting orifice, and the second direction is perpendicular to the first direction.

19. The battery unit according to claim 17, wherein both ends of the first adapter strip in the first direction are connected to an edge of the first mounting orifice; and/or, both ends of the second adapter strip in the first direction are connected to an edge of the second mounting orifice.

20. The battery unit according to any one of claims 13 to 19, wherein the housing is provided with a mounting wall, the mounting wall is provided with a first opening and a second opening, the first electrode terminal is disposed at the first opening, the second electrode terminal is disposed at the second opening, the battery cell is disposed opposite to the mounting wall, and the adapter strip assembly is sandwiched between the mounting wall and the battery cell.

21. The battery unit according to claim 20, wherein the housing comprises:
a housing body, wherein one end of the housing body is provided with an opening; and
an end cap, wherein the end cap is disposed on the housing body to open and close the opening, wherein
the mounting wall is disposed at another end of the housing body and is disposed opposite to the opening, and the mounting wall and a sidewall of the housing body are formed in one piece.

22. The battery unit according to claim 20 or 21, wherein the first adapter strip is connected to the first electrode terminal, and the second adapter strip is connected to the second electrode terminal, both by a penetration welding process.

23. The battery unit according to any one of claims 20 to 22, wherein the first electrode terminal is provided with a first recess recessed toward the first adapter strip, a bottom wall of the first recess is welded to the first adapter strip, and a first cover is disposed at an opening of the first recess.

24. The battery unit according to any one of claims 20 to 23, wherein the second electrode terminal is provided with a second recess recessed toward the second adapter strip, a bottom wall of the second recess is welded to the second adapter strip, and a second cover is disposed at an opening of the second recess.

25. The battery unit according to any one of claims 20 to 24, wherein a sealing element is disposed between the first electrode terminal and an edge of the first opening, and between the second electrode terminal and an edge of the second opening.

26. A battery module, comprising the battery unit according to any one of claims 1 to 25.

27. An electrical device, comprising the battery module according to claim 26.
